# EUROPÄISCHE PATENTANMELDUNG

(11) **EP 4 361 325 A1**
(43) Veröffentlichungstag der Anmeldung: **01.05.2024**
(21) Anmeldenummer: 23203233.4
(22) Anmeldetag: 12.10.2023
(51) Int. Cl.: D01D 5/253, B29C 48/07, B29C 48/12

(54) **FLECHTWERKFASER SOWIE VERFAHREN ZU DEREN HERSTELLUNG**

(30) Priorität: 26.10.2022 DE 102022128285
(71) Anmelder: Dedon GmbH, 21337 Lüneburg (DE)
(72) Erfinder: Kettering, Nils, 21337 Lüneburg (DE)
(74) Vertreter: Hofmeister, Frank

(57) **Zusammenfassung**

Die Erfindung betrifft eine Flechtwerkfaser (1), insbesondere zur Herstellung von Möbeln und/oder Möbelteilen, bestehend aus einem im Extrusionsverfahren hergestellten Grundkörper (2) aus einem Kunststoffmaterial mit einem flachen Querschnitt, dessen Breite ein Vielfaches der Höhe beträgt und wobei der Grundkörper (2) zumindest auf einer Breitseite parallel zueinander verlaufende Erhebungen (3) aufweist. Um eine Flechtwerkfaser (1) zu schaffen, die in der haptischen und optischen Wahrnehmung einer natürlichen Faser nahekommt und dabei einfach herstellbar ist, wird erfindungsgemäß vorgeschlagen, dass die Erhebungen (3) im Querschnitt dreieckförmig ausgebildet sind. Weiterhin betrifft die Erfindung eine Verfahren zur Herstellung einer derartigen Flechtwerkfaser (1).

## Beschreibung

Die Erfindung betrifft eine Flechtwerkfaser, insbesondere zur Herstellung von Möbeln und/oder Möbelteilen, bestehend aus einem im Extrusionsverfahren hergestellten Grundkörper aus einem Kunststoffmaterial mit einem flachen Querschnitt, dessen Breite ein Vielfaches der Höhe beträgt und wobei der Grundkörper zumindest auf einer Breitseite parallel zueinander verlaufende Erhebungen aufweist. Weiterhin betrifft die Erfindung eine Verfahren zur Herstellung einer derartigen Flechtwerkfaser.

Derartige Flechtwerkfasern sind beispielsweise aus der Herstellung witterungsbeständiger Outdoor-Möbel bekannt. Als Basismaterial zur Herstellung dieser Flechtwerkfasern dient in der Regel ein Polyethylen, dem verschiedene Stoffe zur Erzielung der gewünschten Endeigenschaften, wie insbesondere der UV-Beständigkeit, zugesetzt werden. Um diese Kunststofffasern optisch an die natürlichen Rattanflechtfasern anzugleichen, ist es aus der Praxis bekannt, zumindest die im Gebrauch sichtbare Oberfläche der Flechtwerkfasern mit einer Faserstruktur zu versehen.

Aus der DE 10 2015 000 034 B3 ist eine Flechtwerkfaser mit parallel zueinander verlaufenden Stegen bekannt, die durch Stegzwischenräume voneinander beabstandet sind und wobei die Breite der Stegzwischenräume ein bestimmtes Verhältnis zur Höhe der Stege aufweist. Diese bekannte Flechtwerkfaser hat sich in der Praxis gut bewährt, jedoch ist es erstrebenswert, die haptischen und optischen Eigenschaften noch weiter zu verbessern.

Davon ausgehend liegt der Erfindung die **Aufgabe** zugrunde, eine Flechtwerkfaser zu schaffen, die in der haptischen und optischen Wahrnehmung einer natürlichen Faser nahekommt und dabei einfach herstellbar ist.

Die **Lösung** dieser Aufgabenstellung ist erfindungsgemäß dadurch gekennzeichnet, dass die Erhebungen im Querschnitt dreieckförmig ausgebildet sind.

Eine mit den erfindungsgemäß im Querschnitt dreieckförmigen Erhebungen ausgestaltete Flechtwerkfaser zeichnet sich haptisch durch eine angenehme Oberflächenstruktur aus, die darüber hinaus gute Eigenschaften hinsichtlich der Abriebfestigkeit aufweist. Auch der optische Eindruck der Struktur der Erhebungen mit einer sich je nach Blickwinkel verändernden Wahrnehmung der Spitzen der einzelnen Erhebungen und der Übergängen von Erhebung zu Erhebung lässt an eine Naturfaser mit ihren changierenden Oberflächenstrukturen erinnern. Insbesondere auch durch die Wahl der Höhe der dreieckförmigen Erhebungen lässt sich der haptische und optische Eindruck stark variieren.

Gemäß einer bevorzugten Ausführungsform der Erfindung sind die dreieckförmigen Erhebungen zwischenraumfrei direkt parallel nebeneinander angeordnet. Durch diese direkte Aufreihung der dreieckförmigen Erhebungen unmittelbar nebeneinander lässt sich eine besonders feinfühlige Oberflächenstruktur erzeugen.

Zur Ausbildung der Erhebungen wird gemäß einer bevorzugen Ausführungsform der Erfindung vorgeschlagen, dass die beiden, die Erhebung bildenden Seiten der dreieckförmigen Erhebungen unterschiedlich lang ausgebildet sind, das Dreieck also nicht gleichschenklig ausgebildet ist. Durch diese unterschiedliche Seitenlänge der die Erhebung bildenden Seiten ergeben sich unterschiedliche optische Eindrücke je nach dem, von welcher Seite man die Flechtwerkfaser betrachtet.

Gemäß einer alternativen Ausführungsform zur Ausbildung der Erhebungen sind die beiden, die Erhebung bildenden Seiten der dreieckförmigen Erhebungen gleich lang ausgebildet.

Damit die Flechtwerkfaser unabhängig von der gewählten Seitenlänge der die Erhebung bildenden Seiten einen optisch einheitlichen Gesamteindruck vermittelt, wird erfindungsgemäß weiterhin vorgeschlagen, dass die beiden, die Erhebung bildenden Seiten der dreieckförmigen Erhebungen bei allen parallel nebeneinander angeordneten Erhebungen gleich lang ausgebildet sind.

Weiterhin wird mit der Erfindung vorgeschlagen, dass auf beiden Breitseiten des Grundkörpers im Querschnitt dreieckförmige Erhebungen ausgebildet sind, wodurch das Verarbeiten der Flechtwerkfaser vereinfacht wird, da nicht darauf geachtet werden muss, welche Seite der Flechtwerkfaser zur fertigen Oberfläche hin ausgerichtet ist.

Gemäß einer praktischen Ausführungsform der Erfindung wird vorgeschlagen, dass die dreieckförmigen Erhebungen in Längsrichtung der Flechtwerkfaser verlaufen, was einem natürlichen Faserverlauf einer Naturfaser sehr nahe kommt.

Mit einer alternativen Ausführungsform der Erfindung wird vorgeschlagen, dass die dreieckförmigen Erhebungen in einem von der Längsrichtung der der Flechtwerkfaser abweichenden Winkel angeordnet sind. Mit einer derartigen Anordnung der dreieckförmigen Erhebungen können unterschiedliche optische und haptische Effekte bei der Flechtwerkfaser erzielt werden.

Um insbesondere den optischen Eindruck der erfindungsgemäßen Flechtwerkfaser weiter an den einer Naturfaser anzugleichen und dabei gleichzeitig die Herstellung der Flechtwerkfaser relativ einfach auszugestalten, wird mit der Erfindung vorgeschlagen, dass die beiden, die Erhebung bildenden Seiten einer jeden dreieckförmigen Erhebung aus zwei Kunststoffmaterialsträngen co-extrudierte ausgebildet sind, wobei die zwei Kunststoffmaterialstränge der beiden, die Erhebung bildenden Seiten unterschiedliche Farben aufweisen. Insbesondere ein Komplementärkontrast, wie beispielsweise rot-grün, hat sich als besonders naturnah und in der optischen Wahrnehmung angenehm erwiesen.

Bei der beispielhaften Farbwahl einer roten Seite der Erhebung und einer gegenüberliegenden grünen Seite derselben Erhebung ergibt sich in Abhängigkeit des Blickwinkels des Betrachters ein fließender Farbwechsel von rot-grün-gestreift bei direkter senkrechter Betrachtung der Flechtwerkfaser über eine deutliche Vermehrung des Grünanteils oder des Rotanteils der Erhebung je nach seitlichem Betrachtungswinkel.

Dieser changierende fließende Farbwechsel tritt in dieser Ausprägung nur aufgrund der erfindungsgemäßen im Querschnitt dreieckförmigen Ausbildung der Erhebungen auf und lässt den Betrachter an eine Naturfaser erinnern, bei der die Wahrnehmung der Farbe und Oberflächenstruktur auch von Blickwinkel zu Blickwinkel variiert.

Zur Herstellung der erfindungsgemäßen Flechtwerkfaser wird mit einer ersten praktischen Ausführungsform vorgeschlagen, dass die dreieckförmigen Erhebungen als auf den ebenen Grundkörper aufextrudiert ausgebildet sind.

Gemäß einer alternativen Ausführungsform wird mit der Erfindung vorgeschlagen, dass die beiden, die Erhebung bildenden Seiten einer jeden dreieckförmigen Erhebung aus zwei Kunststoffmaterialsträngen co-extrudiert ausgebildet sind, wobei eine der beiden, die Erhebung bildenden Seiten einer jeden dreieckförmigen Erhebung einstückig mit dem Grundkörper ausgebildet ist.

Eine erste Variante des erfindungsgemäßen Verfahrens zur Herstellung einer Flechtwerkfaser, deren beide, die Erhebung bildenden Seiten einer jeden dreieckförmigen Erhebung sowie der Grundkörper in einem Co-Extrusionsverfahren hergestellt werden, zeichnet sich dadurch aus, dass die beiden, die Erhebung bildenden Seiten einer jeden dreieckförmigen Erhebung aus zwei separaten Kunststoffmaterialsträngen co-extrudiert werden, wobei eine der beiden, die Erhebung bildenden Seiten einer jeden dreieckförmigen Erhebung einstückig mit dem Grundkörper extrudiert wird.

Schließlich wird mit einer zweiten Variante des erfindungsgemäßen Verfahrens zur Herstellung einer Flechtwerkfaser vorgeschlagen, dass die beiden, die Erhebung bildenden Seiten einer jeden dreieckförmigen Erhebung aus zwei separaten Kunststoffmaterialsträngen auf den Grundkörper co-extrudiert werden.

Weitere Merkmale und Vorteile der Erfindung ergeben sich anhand der zugehörigen Zeichnungen, in denen drei Ausführungsbeispiele einer erfindungsgemäßen

Flechtwerkfaser nur beispielhaft dargestellt sind, ohne die Erfindung auf diese Ausführungsbeispiele zu beschränken. In den Zeichnungen zeigt:
- Fig. 1: ein vergrößerter ausschnittweiser perspektivischer Querschnitt durch eine erfindungsgemäße Flechtwerkfaser gemäß einer ersten Ausführungsform;
- Fig. 2: eine Ansicht gemäß Fig. 1, jedoch eine zweite Ausführungsform einer erfindungsgemäßen Flechtwerkfaser darstellend und
- Fig. 3: eine Ansicht gemäß Fig. 1, jedoch eine dritte Ausführungsform einer erfindungsgemäßen Flechtwerkfaser darstellend.

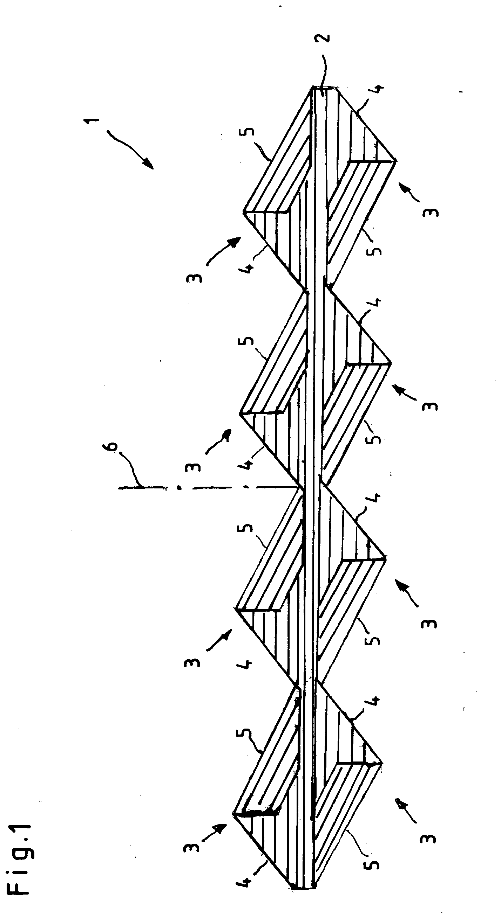

Die Abbildung Fig. 1 bis Fig. 3 zeigen jeweils in einem Querschnitt schematisch den Aufbau einer Flechtwerkfaser 1.

Derartige Flechtwerkfasern 1 werden insbesondere zur Herstellung von Möbeln und/oder Möbelteilen verwendet. Ebenso können beispielsweise aber auch Wandverkleidungen oder Skulpturen aus diesen Flechtwerkfasern 1 hergestellt werden.

Die nachfolgend beschriebenen Flechtwerkfasern 1 bestehen aus einem Grundkörper 2 aus einem Kunststoffmaterial, vorzugsweise einem Polyethylen (PE), mit einem flachen Querschnitt, dessen Breite ein Vielfaches der Höhe beträgt und wobei der Grundkörper 2 zumindest auf einer Breitseite parallel zueinander verlaufende Erhebungen 3 aufweist. Die Erhebungen 3 bestehen ebenfalls aus einem Kunststoffmaterial, vorzugsweise einem Polyethylen (PE).

Um eine derartige mit Erhebungen 3 ausgestaltete Flechtwerkfaser 1 so auszubilden, dass diese an eine Naturfaser erinnert und sich haptisch durch eine angenehme Oberflächenstruktur auszeichnet, die darüber hinaus gute Eigenschaften hinsichtlich der Abriebfestigkeit aufweist, die Erhebungen 3 im Querschnitt dreieckförmig ausgebildet.

Bei den in den Abbildungen dargestellten Flechtwerkfasern 1 sind die dreieckförmigen Erhebungen 3 so ausgebildet, dass die beiden, vom Grundkörper 2 aufra-Bei den in den Abbildungen dargestellten Flechtwerkfasern 1 sind die dreieckförmigen Erhebungen 3 so ausgebildet, dass die beiden, vom Grundkörper 2 aufragenden und die Erhebung 3 bildenden Seiten 4 und 5 der dreieckförmigen Erhebungen 3 unterschiedlich lang ausgebildet sind. Selbstverständlich ist es gemäß einer alternativen Ausgestaltungsform der Erhebungen 3 auch möglich und wünschenswert, die beiden, die Erhebung 3 bildenden Seiten 4 und 5 gleich lang, also gleichschenklig, auszubilden

Auch der optische Eindruck der Struktur der dreieckförmigen Erhebungen 3 mit einer sich je nach Blickwinkel verändernden Wahrnehmung lässt an eine Naturfaser mit ihren changierenden Oberflächenstrukturen erinnern.

Bei den in Fig. 1 bis 3 dargestellten Ausführungsformen sind die Erhebungen 3 in Richtung der Längsachse 6 Grundkörpers 2 angeordnet, was einem natürlichen Faserverlauf einer Naturfaser sehr nahe kommt.

Selbstverständlich ist es auch möglich, dass die Erhebungen 3 in einem von der Richtung der Längsachse 6 des Grundkörpers 2 abweichenden Winkel angeordnet sind. Mit einer derartigen Anordnung der Erhebungen können unterschiedliche optische und haptische Effekte bei der Flechtwerkfaser 1 erzielt werden.

Um insbesondere den optischen Eindruck der Flechtwerkfaser 1 weiter an den einer Naturfaser anzugleichen und dabei gleichzeitig die Herstellung der Flechtwerkfaser 1 relativ einfach auszugestalten, sind die beiden, die Erhebung 3 bildenden Seiten 4 und 5 einer jeden dreieckförmigen Erhebung 3 aus zwei Kunststoffmaterialsträngen co-extrudierte ausgebildet, wobei die zwei Kunststoffmaterialstränge der beiden, eine jede Erhebung 3 bildenden Seiten 4 und' 5 unterschiedliche Farben aufweisen. Insbesondere ein Komplementärkontrast, wie beispielsweise rot-grün, hat sich als besonders naturnah und in der optischen Wahrnehmung angenehm erwiesen.

Bei der beispielhaften Farbwahl einer roten Seite 4 oder 5 der Erhebung 3 und einer gegenüberliegenden grünen Seite 5 oder 4 derselben Erhebung 3 ergibt sich in Abhängigkeit des Blickwinkels des Betrachters ein fließender Farbwechsel von rot-grün-gestreift bei direkter senkrechter Betrachtung der Flechtwerkfaser 1 über eine deutliche Vermehrung des Grünanteils oder des Rotanteils der Erhebung je nach seitlichem Betrachtungswinkel.

Dieser changierende fließende Farbwechsel tritt in dieser Ausprägung nur aufgrund der erfindungsgemäßen im Querschnitt dreieckförmigen Ausbildung der Erhebungen 3 besonders deutlich auf und lässt den Betrachter an eine Naturfaser erinnern, bei der die Wahrnehmung der Farbe und Oberflächenstruktur auch von Blickwinkel zu Blickwinkel variiert.

Bei der in Fig. 1 dargestellten ersten Ausführungsform einer Flechtwerkfaser 1 weist der Grundkörper 2 auf beiden Breitseiten parallel zueinander verlaufende, im Querschnitt dreieckförmige Erhebungen 3 auf, die zwischenraumfrei direkt parallel nebeneinander angeordnet sind.

Das Herstellen der in Fig. 1 dargestellten Flechtwerkfaser 1 erfolgt in einem Co-Extrusionsverfahren derart, dass die beiden, die Erhebung 3 bildenden Seiten 4 und 5 einer jeden dreieckförmigen Erhebung 3 aus zwei separaten Kunststoffmaterialsträngen co-extrudiert werden, wobei eine der beiden, die Erhebung 3 bildenden Seiten 4 einer jeden dreieckförmigen Erhebung 3 einstückig mit dem Grundkörper 2 extrudiert wird.

Die in Fig. 1 dargestellte Ausbildung der im Querschnitt dreieckförmigen Erhebungen 3 auf beiden Breitseiten des Grundkörpers 2 ist vorteilhaft, da dadurch das Verarbeiten der Flechtwerkfaser 1 vereinfacht wird, da nicht darauf geachtet werden muss, welche Seite der Flechtwerkfaser 1 zur Oberfläche des fertigen Produkts hin ausgerichtet ist.

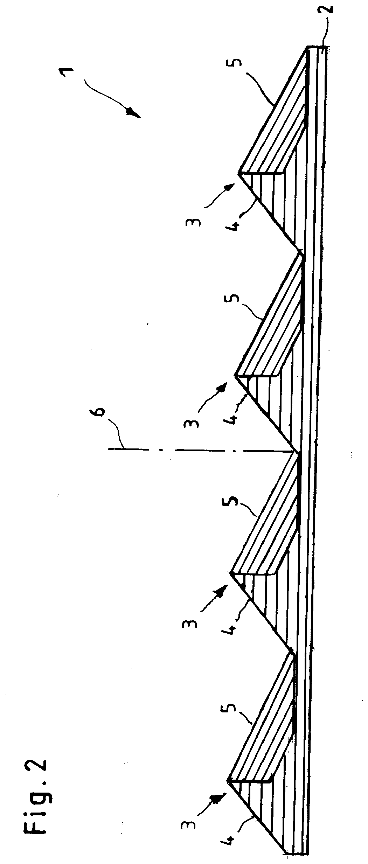

Die Abbildung Fig. 2 zeigt eine alternative zweite Ausführungsform zur Ausbildung einer Flechtwerkfaser 1, bei der der Grundkörper 2 nur auf einer Breitseite parallel zueinander verlaufende, im Querschnitt dreieckförmige Erhebungen 3 aufweist, die zwischenraumfrei direkt parallel nebeneinander angeordnet sind.

Auch bei dieser Ausführungsform sind die beiden, die Erhebung 3 bildenden Seiten 4 und 5 einer jeden dreieckförmigen Erhebung 3 aus zwei separaten Kunststoffmaterialsträngen co-extrudiert werden, wobei eine der beiden, die Erhebung 3 bildenden Seiten 4 einer jeden dreieckförmigen Erhebung 3 einstückig mit dem Grundkörper 2 extrudiert wird.

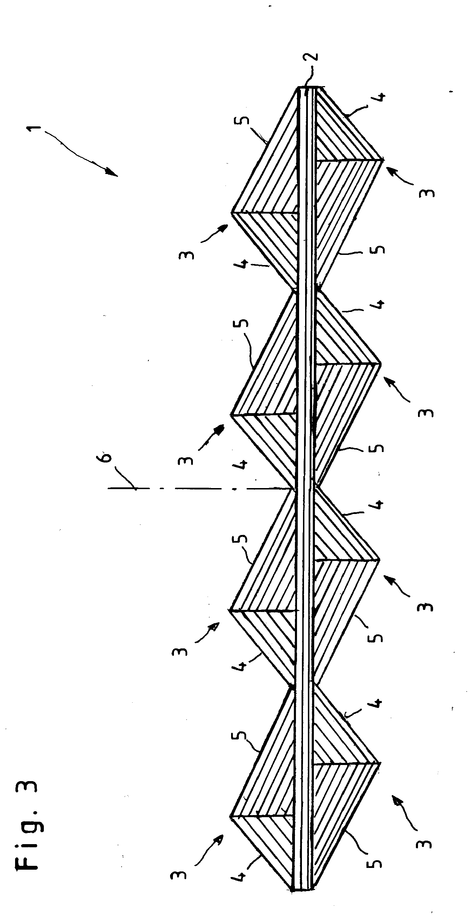

Die in Fig. 3 dargestellte dritte Ausführungsform zur Ausbildung einer Flechtwerkfaser 1 unterscheidet sich von der in Fig. 1 dargestellten Ausführungsform dadurch, dass die beiden, die Erhebung 3 bildenden Seiten 4 und 5 einer jeden dreieckförmigen Erhebung 3 als separat auf den ebenen Grundkörper 2 aufextrudierte Materialstränge ausgebildet sind. Im Gegensatz zur Darstellung gemäß Fig. 1 ist hier keine Seite 4 oder 5 einstückig mit dem Grundkörper 2 ausgebildet.

Alternativ zu den in den Abbildungen Fig. 1 bis Fig. 3 dargestellten Ausführungsformen lassen sich selbstverständlich auch alle Unterkombinationen der dargestellten Ausführungsformen als Flechtwerkfasern 1 herstellen.

Die wie zuvor beschrieben ausgebildeten Flechtwerkfasern 1 mit den im Querschnitt dreieckförmigen Erhebungen 3 zeichnen sich dadurch aus, dass sie in der haptischen und optischen Wahrnehmung einer natürlichen Faser nahekommen und dabei einfach herstellbar sind.

Der optische Eindruck ist besonders vorteilhaft, wenn das Material der beiden, die jeweiligen dreieckförmigen Erhebungen 3 bildenden Seiten 4 und 5 unterschiedliche Farben aufweisen, insbesondere komplementäre Farben.

Durch die Wahl der Länge der beiden vom ebenen Grundkörper 2 aufragenden Seiten 4 und 5, die die jeweiligen dreieckförmigen Erhebungen 3 bilden, lassen sich die Höhe der Erhebungen 3 und der Winkel, unter dem die Seiten 4 und 5 an der Spitze der jeweiligen dreieckförmigen Erhebung 3 aneinanderstoßen variieren, wodurch der optische und auch der haptische Eindruck solchermaßen gefertigter Flechtwerkfasern 1 auf den Betrachter verschieden ausfällt. Je nach Blickwinkel des Betrachters tritt ein unterschiedliches Farbeffektempfinden ein, das einen harmonischen Gesamteindruck der Flechtwerkfaser 1 und des aus dieser Flechtwerkfaser 1 gebildeten Endprodukts gewährleistet.

### Bezugszeichenliste

- 1: Flechtwerkfaser
- 2: Grundkörper
- 3: Erhebung
- 4: Seite
- 5: Seite
- 6: Längsachse

## Patentansprüche

1. Flechtwerkfaser (1), insbesondere zur Herstellung von Möbeln und/oder Möbelteilen, bestehend aus einem im Extrusionsverfahren hergestellten Grundkörper (2) aus einem Kunststoffmaterial mit einem flachen Querschnitt, dessen Breite ein Vielfaches der Höhe beträgt und wobei der Grundkörper (2) zumindest auf einer Breitseite parallel zueinander verlaufende Erhebungen (3) aufweist,
**dadurch gekennzeichnet,**
**dass** die Erhebungen (3) im Querschnitt dreieckförmig ausgebildet sind.

2. Flechtwerkfaser (1) nach Anspruch 1, **dadurch gekennzeichnet, dass** die dreieckförmigen Erhebungen (3) zwischenraumfrei direkt parallel nebeneinander angeordnet sind.

3. Flechtwerkfaser (1) nach einem der Ansprüche 1 oder 2, **dadurch gekennzeichnet, dass** die beiden, die Erhebung (3) bildenden Seiten (4, 5) der dreieckförmigen Erhebungen (3) unterschiedlich lang ausgebildet sind.

4. Flechtwerkfaser (1) nach einem der Ansprüche 1 oder 2, **dadurch gekennzeichnet, dass** die beiden, die Erhebung (3) bildenden Seiten (4, 5) der dreieckförmigen Erhebungen (3) gleich lang ausgebildet sind.

5. Flechtwerkfaser (1) nach Anspruch 3 oder 4, **dadurch gekennzeichnet, dass** die beiden, die Erhebung (3) bildenden Seiten (4, 5) der dreieckförmigen Erhebungen (3) bei allen parallel nebeneinander angeordneten Erhebungen (3) gleich lang ausgebildet sind.

6. Flechtwerkfaser (1) nach einem der Ansprüche 1 bis 5, **dadurch gekennzeichnet, dass** auf beiden Breitseiten des Grundkörpers (2) im Querschnitt dreieckförmige Erhebungen (3) ausgebildet sind.

7. Flechtwerkfaser (1) nach einem der Ansprüche 1 bis 6, **dadurch gekennzeichnet, dass** die dreieckförmigen Erhebungen (3) in Längsrichtung der Flechtwerkfaser (1) verlaufen.

8. Flechtwerkfaser (1) nach einem der Ansprüche 1 bis 6, **dadurch gekennzeichnet, dass** die dreieckförmigen Erhebungen (3) in einem von der Längsrichtung der der Flechtwerkfaser (1) abweichenden Winkel angeordnet sind.

9. Flechtwerkfaser (1) nach einem der Ansprüche 1 bis 8, **dadurch gekennzeichnet, dass** die beiden, die Erhebung (3) bildenden Seiten (4, 5) einer jeden dreieckförmigen Erhebung (3) aus zwei Kunststoffmaterialsträngen co-extrudierte ausgebildet sind, wobei die zwei Kunststoffmaterialstränge der beiden, die Erhebung (3) bildenden Seiten (4, 5) unterschiedliche Farben aufweisen.

10. Flechtwerkfaser (1) nach einem der Ansprüche 1 bis 9, **dadurch gekennzeichnet, dass** die dreieckförmigen Erhebungen (3) als auf den ebenen Grundkörper (2) aufextrudiert ausgebildet sind.

11. Flechtwerkfaser (1) nach einem der Ansprüche 1 bis 9, **dadurch gekennzeichnet, dass** die beiden, die Erhebung (3) bildenden Seiten (4, 5) einer jeden dreieckförmigen Erhebung (3) aus zwei Kunststoffmaterialsträngen co-extrudiert ausgebildet sind, wobei eine der beiden, die Erhebung (3) bildenden Seiten (4 oder 5) einer jeden dreieckförmigen Erhebung (3) einstückig mit dem Grundkörper (2) ausgebildet ist.

12. Verfahren zur Herstellung einer Flechtwerkfaser (1) nach einem der Ansprüche 1 bis 11, wobei die beiden, die Erhebung (3) bildenden Seiten (4, 5) einer jeden dreieckförmigen Erhebung (3) sowie der Grundkörper (2) in einem Co-Extrusionsverfahren hergestellt werden,
**dadurch gekennzeichnet,**
**dass** die beiden, die Erhebung (3) bildenden Seiten (4, 5) einer jeden dreieckförmigen Erhebung (3) aus zwei separaten Kunststoffmaterialsträngen co-extrudiert werden, wobei eine der beiden, die Erhebung (3) bildenden Seiten (4 oder 5) einer jeden dreieckförmigen Erhebung (3) einstückig mit dem Grundkörper (2) extrudiert wird.

13. Verfahren zur Herstellung einer Flechtwerkfaser (1) nach einem der Ansprüche 1 bis 11, wobei die beiden, die Erhebung (3) bildenden Seiten (4, 5) einer jeden dreieckförmigen Erhebung (3) sowie der Grundkörper (2) in einem Co-Extrusionsverfahren hergestellt werden,
**dadurch gekennzeichnet,**
**dass** die beiden, die Erhebung (3) bildenden Seiten (4, 5) einer jeden dreieckförmigen Erhebung (3) aus zwei separaten Kunststoffmaterialsträngen auf den Grundkörper (2) co-extrudiert werden.
